# EUROPEAN PATENT SPECIFICATION

(11) **EP 1 409 423 B1**
(45) Date of publication and mention of the grant of the patent: **06.12.2006**
(21) Application number: 02751230.0
(22) Date of filing: 18.07.2002
(51) Int. Cl.: C03B 37/05

(54) **METHOD AND APPARATUS FOR THE MANUFACTURE OF MINERAL WOOL**
VERFAHREN UND VORRICHTUNG ZUR HERSTELLUNG VON MINERALWOLLE
PROCEDE ET APPAREIL DE FABRICATION DE LAINE MINERALE

(30) Priority: 20.07.2001 FI 20011561; 20.07.2001 FI 20011562
(43) Date of publication of application: 21.04.2004
(73) Proprietor: Paroc Group Oy Ab, 01300 Vantaa (FI)
(72) Inventor: ASTRAND, Erik, FIN-21600 Parainen (FI); WALLI, Bjarne, FIN-21600 Parainen (FI); PERANDER, Michael, FIN-21600 Parainen (FI)
(74) Representative: Suominen, Kaisa Liisa
(86) International application number: PCT/FI2002/000641
(87) International publication number: WO 2003/008353

(56) References cited:
- GB-A- 844 232
- GB-A- 999 119
- SE-B- 442 988
- SE-C- 137 084
- SE-C- 174 678
- US-A- 2 577 431
- US-A- 2 663 051
- US-A- 2 700 176
- US-A- 2 807 048

## Description

The present invention relates to a method and an apparatus for the manufacture of mineral wool according to the preamble of the enclosed independent claims.

Mineral wool, such as rock wool, is made by melting suitable mineral-containing raw materials, such as diabase, limestone and slag in a melting furnace. The obtained silicate-containing mineral melt is discharged from the melting furnace to a fiberising apparatus, such as a spinning machine, in which the mineral melt is formed into mineral fibres with the aid of centrifugal force.

Nowadays a fiberising apparatus of the spinning machine type comprises a series of rotating fiberising rotors or spinning rotors, at present typically 3 to 4 rotors. The mineral melt from the melting furnace is directed toward the mantle surface of the first rotor where it gets hold of the rotor's mantle surface to a certain extent before it is thrown out as a cascade of drops against the mantle surface of the adjacent second rotor in the series. A part of the mineral melt gets then sufficient hold of the mantle surface of the second rotor in order to be formed into fibres due to the effect of the centrifugal force. Another part of the mineral melt is thrown further against the mantle surface of the third rotor. In this way the mineral melt is "transported" as a jet of mineral melt drops or a drop cascade, successively from one rotor to the subsequent one through the whole fiberising apparatus, while a part of the mineral melt is formed into mineral fibres. A binder may be applied on the formed mineral fibres, either during the fibre formation or after it.

In fiberising apparatuses the first rotor in the rotor series acts mainly as an accelerating rotor, and the subsequent rotors act as the actual fibre producing spinning rotors. In other words, in a fiberising apparatus comprising four rotors the task of the first rotor is to accelerate the mineral melt and throw it, with a suitable velocity, towards the second rotor acting as the first actual fiberising rotor. In order to obtain fibres of good quality it is required that the mineral melt on the rotor's mantle surface reaches a sufficiently high velocity, which is not the case on the first rotor. A fibre formation on the first rotor of a fiberising apparatus is considered undesirable, as this rotor is capable of generating mainly thicker fibres and so-called shot, both of which reduce the quality of the final product. Shot is generally defined as that weight fraction of the binderless fibre material which does not pass through a 32 µm sieve.

In fiberising apparatuses with four rotors the route of the mineral melt is designed to pass from one rotor to the subsequent one, so that each rotor is hit by a melt jet drops or a drop cascade. The melt jet drops or the drop cascade hits the rotor only once with a relatively low angle of incidence, so that a suitable quantity of melt is led forward from each rotor to the subsequent rotor in the series.

Conventional fiberising apparatuses of the spinning rotor type often have an efficiency below 80 %, calculated as the quantity of produced fibre material, i.e. mineral wool, in proportion to amount of melt fed. Usually the mineral wool contains 55 to 75 % fibres, and the rest is comprised of undesired shot. The production capacity of mineral wool has been increased by supplying more melt to one fiberising apparatus. If the capacity of the fiberising apparatus is thereby exceeded it will lessen the hold which the supplied mineral melt gets of the mantle surfaces of the rotors, and too thick rings of mineral melt are formed on the rotors. Due to the poor hold the mineral melt will not accelerate sufficiently from one rotor to the subsequent one, which results in increased generation of shot and in a poorer quality of the mineral fibres. Therefore the attempts to increase the capacity of a fiberising apparatus by increasing the melt feeding has resulted in a substantially poorer quality of the obtained fibre material, i.e. it has increased the proportion of the shot in the produced mineral wool, and at the same time it has reduced the efficiency of the fiberising apparatus.

Attempts have also been made to increase the production capacity in the making of mineral wool by arranging several fiberising apparatuses side by side, so that all fiberising apparatuses have a melt feeding from a single melting furnace. The use of several fiberising apparatuses side by side results in that the mineral fibre mat accumulating on the collecting member becomes much wider than usually. At a capacity increase of this kind it is thus necessary to replace the production line equipment, such as collecting members, conveyors, etc. In addition it will be a complicated task to provide a smooth operation of the melt feeding from one melting furnace to several fiberising apparatuses, and this will easily result in overloading of one or more fiberising apparatuses while reducing the quality of the manufactured mineral wool.

Another problem occurring in the use of several fiberising apparatuses side by side is that automatic control of a fiberising process comprising several fiberising apparatuses will become complicated and expensive. Usually the melt feeding to the first rotor and the binder application at the fiberising rotors is controlled by measuring the power consumption of the fiberising apparatus. Automatic process control becomes the more complicated and difficult to handle the more fiberising apparatuses one has in the process.

It is well known that there exist many different uses for mineral wool. It is used, among other things, as insulating material in construction, e.g. in acoustic boards, and for different types of technical insulation. It is desirable to be able to manufacture mineral wool for different uses, with different properties specific for each product. For example, mineral wool for technical insulation of piping and the like may advantageously comprise of mainly thick and coarse mineral fibres. On the other hand, thin mineral fibres provide insulating properties, and therefore they are particularly well suited for the making of mineral wool used in construction.

Some times it is desirable to manufacture mineral wool containing both thin and short mineral fibres, which provide a good thermal insulation capacity, and coarse and long mineral fibres, which provide strength. At present this is made so that two separate mineral wool mats with different properties are produced, starting with two mineral melts. These mineral wool mats are then placed on top of each other and processed so that a final product with two or more "layers" of different mineral wool qualities is obtained. This practice does not provide mineral fibres with different desirable properties uniformly distributed in the final product.

GB 999 119 A discloses an apparatus for fiberising mineral melt. The apparatus comprises a series of fiberising rotors and the melt is fed onto the peripheral surface of the first rotor from where it is thrown to the next, succeeding rotor in the series. The minimum distance between the peripheral surfaces of any two fiberising rotors rotating in different directions, at their closest point, is at least 8 cm at that point.

US 2,700,176 A discloses an apparatus for fiberising mineral melt. The apparatus comprises pairs of rotors, each adapted for high-speed rotation. The peripheral surfaces of the rotors have annular faces lying at angles to one another. Rotors are positioned with the peripheral surfaces of each pair being in spaced but adjacent relationship with opposed annular faces lying in parallel planes and with the peripheral surface of one of the rotors lying in the path of the melt.

The above-mentioned disadvantages increase the production costs and/or reduce the quality of the produced mineral wool, when aiming at an increased production capacity.

Therefore the object of this invention is to provide a method and an apparatus in making mineral wool fibres where the above-mentioned disadvantages are minimised.

Thereby the object is to provide a method and an apparatus in making mineral wool fibres in a fiberising apparatus which enables an increased production capacity in the making of mineral wool, without the above mentioned reduced quality of the mineral wool fibres.

A second object of the present invention is to provide a method and an apparatus in the making of mineral wool which enables an increased capacity using production lines with a normal width.

A third object of the present invention is to provide a method and an apparatus in the making of mineral wool fibres so that the size and proportion of shot contained in the produced fibre material is smaller than in conventional making of mineral wool fibres.

A further object of one embodiment of the invention is to provide a fiberising apparatus which enables production of mineral wool having different properties.

These objects are attained with a method and an apparatus having the characteristics presented in the characterising part of the enclosed independent claims.

A typical method for the making of mineral wool fibres according to the present invention with a fiberising apparatus comprising rotating rotors, for the forming of mineral melt into fibres, of which rotors the first and the second rotors rotating toward each other form an upper rotor pair, and at least one rotor, preferably a rotor pair, is arranged below the upper rotor pair, thus comprises the following steps:
- mineral melt is supplied from a melting furnace or the like in the form of a melt jet toward a first position on the mantle surface of the first rotor,
- mineral melt is thrown out from the mantle surface of the first rotor in the form of a drop cascade toward the mantle surface of the second rotor,
- a first portion of mineral melt is formed into fibres at the second rotor and is blown off the rotor, and
- a second portion of mineral melt is thrown out from the second rotor in the form of a drop cascade,
- the main portion of that drop cascade, which is thrown out from the second rotor is arranged to be thrown toward the mantle surface of the first rotor, toward a second position downstream from said first position on the mantle surface, and
- a portion of mineral melt is formed into fibres at the first rotor and blown off the rotor.
   A typical apparatus according to the present invention for the making of mineral wool fibres comprises
- rotating rotors for forming mineral melt into fibres, of which rotors a first rotor and a second rotor rotating toward each other form an upper rotor pair, and at least one rotor, preferably a rotor pair, is arranged below the upper rotor pair, whereby the rotors are arranged so that
- the first rotor of the upper rotor pair has a mantle surface, toward which mineral melt from a melting furnace or the like is arranged to be supplied in the form of a melt jet, and from which mineral melt is thrown out in the form of a drop cascade toward the second rotor in the upper rotor pair,
- the second rotor of the upper rotor pair has a mantle surface, at which a portion of the mineral melt is formed into fibres, and from which a portion of the mineral melt is thrown out in the form of a drop cascade, and
- the minimum distance between the mantle surfaces of the first and second rotors in the upper rotor pair is 5 to 15 mm, typically 9 to 11 mm,
- and blow-off means for blowing off the fibres from the mantle surfaces.

Now it is surprisingly discovered that it is possible to increase the production capacity in the making of mineral wool fibres without reducing the fibre quality, by locating the first and second rotors sufficiently close to each other in a fiberising apparatus comprising at least three, preferably four rotors. This provides an intentionally fiberising first rotor, and the fibre quality of the mineral fibres formed at the first rotor equals that of the mineral fibres formed at the other rotors.

The present invention is suitable for the making of mineral wool. In this context the term "mineral wool" means material in the form of fibres, such as rock wool, stone wool, slag wool, glass wool, and other similar materials produced from inorganic raw materials. With the aid of the present invention mineral wool can be advantageously made of a mineral melt, in which the proportions of the main components may vary according to the following way:

| **Component** | **Proportion in %** |
|---|---|
| SiO₂ | 35 - 73 |
| TiO₂ | 0 - 8 |
| Al₂O₃ | 0 - 25 |
| FeO | 0 - 15 |
| MgO | 0-30 |
| CaO | 0 - 40 |
| Na₂O | 0-18 |
| K₂O | 0 - 10 |
| P₂O₅ | 0 - 6 |
| B₂O₃ | 0 - 10 |

According to an embodiment of the present invention the mineral melt is supplied from a melting furnace in the form of a melt jet having a certain width toward a first position on the mantle surface of the rotating first rotor. The supplied melt jet is advantageously as narrow, round and solid as possible. In practice the diameter of the melt jet is in most cases about 20 to 30 mm. In order to achieve an optimal melt feeding, in other words, so that the mineral melt should get the best possible hold of the mantle surface of the first rotor, the centre of the melt jet advantageously hits the mantle surface of the first rotor at a first position which is as close to the highest point of the first rotor as possible, without having substantial splashing of the supplied melt. According to an advantageous embodiment of the present invention the centre of the melt jet hits the mantle surface of the first rotor within a sector of 0° - 30°, preferably 0° - 15°, as seen from the highest point of the rotor in the rotor's direction of rotation.

Mainly all of the melt jet hitting the first position on the mantle surface of the first rotor is then thrown towards the mantle surface of the second rotor in the form of a drop cascade comprising melt drops of varying size and form. The drop cascade has a certain width in the peripheral direction of the rotor as it hits the mantle surface of the second rotor, which is due to the fact that the melt jet has a certain width as it hits the mantle surface of the first rotor, and that different parts of the melt jet hit different points on the mantle surface. In addition the individual melt drops stay periods of different lengths on the mantle surface of the first rotor before they are thrown out. As a consequence they are thrown out from different points on the first rotor's mantle surface toward the mantle surface of the second rotor.

The second rotor's direction of rotation is opposite to that of the first rotor. According to an embodiment of the present invention the drop cascade from the first rotor hits the mantle surface of the second rotor as close as possible to the highest point of the second rotor, without causing larger amounts of splashes. Usually, the higher up the drop cascade hits the mantle surface of the second rotor, the better hold the melt drops will get of the mantle surface. When the mineral melt has a good hold of the second rotor's mantle surface the fiberising capacity of the second rotor also increases, and at the same time the capacity of the whole fiberising apparatus increases.

According to the present invention the first and the second rotors rotating toward each other form an upper rotor pair. According to an advantageous embodiment of the present invention the first and second rotors are placed so that their highest points are located horizontally approximately on the same level. However, when required the highest points of the first and second rotors can be also located on different levels. According to one advantageous embodiment of the invention the highest point of the second rotor can be located on a level of ± 10°, preferably ± 5°, from the level of the highest point of the first rotor. This angle is defined so that a horizontal line drawn through the highest point of the first rotor acts as the base line. Then the second rotor is placed so that a line drawn through the highest points of the first and second rotors form the desired angle with said base line when the first and second rotors are located sufficiently close to each other. The second rotor can be placed so that its highest point will be located on a higher level than the highest point of the first rotor.

According to an embodiment of the present invention, that portion of the mineral melt which did not get a hold of the second rotor's mantle surface and which was not formed to mineral fibres, will be thrown back toward a second position on the mantle surface of the first rotor located downstream from the first position. The second position is located on the mantle surface of the first rotor above the centre of the rotor. According to an embodiment of the present invention the first and the second rotor are placed so close to each other that mainly all that mineral melt which did not get a hold of the second rotor will be thrown back as a drop cascade toward the mantle surface of the first rotor. According to the invention the minimum distance between the first rotor and the second rotor is 5 to 15 mm, preferably 9 to 11 mm.

Thus according to a preferred embodiment of the present invention the main portion of that drop cascade which is thrown out from the second rotor is arranged to be intentionally thrown back toward the mantle surface of the first rotor at a second position downstream from the first position on the mantle surface. Here that portion of the mineral melt which did not get a hold of the mantle surface of the second rotor but is thrown back toward the first rotor is regarded as a drop cascade. This drop cascade does not include fibres and any potential shot which are formed at the second rotor. The main part of the drop cascade comprises at least 60 weight-% of that drop cascade which is thrown out from the second rotor, advantageously at least 75 weight-%, and most advantageously at least 90 weight-%.

According to the invention the short distance between the first rotor and the second rotor enables the mineral melt thrown back from the second rotor to hit the first rotor and to get a good hold of the mantle surface of the first rotor. On the mantle surface of the second rotor the mineral melt gained a higher velocity with which it was thrown back to the first rotor. This means that the mineral melt thrown out from the second rotor will hit the mantle surface of the first rotor at a second position with a impact force, which is substantially higher than that of the mineral melt which hits the mantle surface of the first rotor at the first position at the feeding of melt. Namely during the melt feeding the mineral melt is supplied from the melting furnace through a melt feeding trough toward the mantle surface of the first rotor, whereby only the gravity accelerates the mineral melt and it hits the mantle surface with a relatively low velocity.

According to the invention the mineral melt can also be thrown back and forth several times between the first and the second rotors, before that melt which did not form into mineral fibres will be thrown downward from the upper rotor pair in the form of a drop cascade.

According to an embodiment of the present invention a third rotating rotor is placed below the upper rotor pair, which is formed by the first and second rotors. The third rotor is placed so that the downward directed drop cascade from the upper rotor pair hits its mantle surface as high as possible without any particular splashing. According to a preferred embodiment of the present invention the third rotor is placed so that the drop cascade from the upper rotor pair hits the mantle surface of the third rotor within a sector which is narrower than 60°, advantageously within a sector between 25° and 40°, where the sector refers to a sector in the rotor's direction of rotation from a line drawn through the centres of the first and third rotors. According to the present invention the third rotor will receive in the form of a drop cascade mainly all that mineral melt which was not formed into mineral fibres at the upper rotor pair.

According to the present invention it is advantageous if the drop cascade from the upper rotor pair toward the third rotor is as narrow as possible. It is also advantageous if the number of melt drops is high in that portion of the drop cascade which hits the mantle surface of the third rotor at a point located high up. The spreading of the drop cascade can be minimised i.a. by varying the rotor sizes and the distance between the first and second rotors in the upper rotor pair.

A fourth rotor can be advantageously placed next to the third rotor. The fourth rotor will then together with the third rotor form a lower rotor pair where the rotors rotate toward each other. The fourth rotor is located so that the drop cascade from the third rotor hits its mantle surface as high up as possible. According to an advantageous embodiment of the invention, that portion of the mineral melt which did not get a sufficiently good hold of the fourth rotor's mantle surface can be thrown back toward the mantle surface of the third rotor where it can be formed into mineral fibres.

According to the invention the mineral melt can also be thrown back and forth several times between the third and the fourth rotors, before the main portion of the mineral melt is formed into mineral fibres.

According to a further embodiment of the present invention it is advantageous to supply mineral melt to both rotors in the upper rotor pair. The mineral melt is supplied at the mantle surfaces of the upper rotor pair in the form of two substantially separate melt jets. The melt jets, which are fed, can be supplied from the same melting furnace or from two different melting furnaces. In order to have an optimal feeding of melt, i.e. so that the melts will get a hold which is as good as possible on the mantle surfaces of the rotors, the melt jets advantageously hit the mantle surfaces of the rotors at positions which are as close to the highest points of the rotors as possible, without causing any particular splashing of the melt. It is not necessary for the mass flows of the used melt jets to be equal, it is possible to supply more melt to one rotor than to the other. It is possible to periodically supply melt, first to one rotor, and then to the other rotor. It is not necessary to interrupt the fiberising process when changing the melt feeding from one rotor to the other. It is also possible to feed melt simultaneously to both rotors in the upper rotor pair.

Feeding of mineral melt to both rotors in the upper rotor pair provides better possibilities to vary the properties of the produced fibre material. There can for example be supplied mineral melts with different viscosities or with different chemical compositions to the rotors in the upper rotor pair.

According to an embodiment of the present invention it is advantageous to supply mineral melt in the form of two melt jets toward the first rotor in the upper rotor pair. The feeding of the melt jets can be supplied from the same melting furnace or from two different melting furnaces. Thus it is possible to supply one melt jet toward both the mantle surfaces of the first rotor and of the second rotor in the upper rotor pair of the fiberising apparatus, or to feed two melt jets toward the mantle surface of the first rotor in the fiberising apparatus.

According to one embodiment of the present invention a method for the making of mineral fibres with the aid of a fiberising apparatus comprising rotating rotors for forming fibres of a mineral melt supplied to the mantle surface of the rotor, of which rotors a first and second rotor rotating toward each other are arranged side by side so that they form an upper rotor pair, and at least one rotor, advantageously a rotor pair, is arranged below the upper rotor pair, thus comprises the following steps:
- mineral melt is fed from a melting furnace or the like in the form of a melt jet toward a first position on the mantle surface of a first rotating rotor of the upper rotor pair, and
- additional mineral melt is fed in the form of a second melt jet
   - toward a second position on the mantle surface of the first rotating rotor of the upper rotor pair, or
   - toward a first position on the mantle surface of the second rotating rotor in the upper rotor pair.
   According to an embodiment of the present invention a fiberising apparatus for the making of mineral wool fibres comprises
- rotating rotors for forming mineral melt into fibres, of which rotors a first and a second rotor rotating toward each other form an upper rotor pair, and at least one rotor, preferably a rotor pair, is arranged below the upper rotor pair, and
- means for supplying mineral melt in the form of a first melt jet from a melting furnace or the like toward a first position on the mantle surface of the first rotor in the upper rotor pair, and
- blow-off means for blowing off the fibres from the mantle surfaces of the rotors.
   Thereby the fiberising apparatus comprises further means for supplying a second melt jet
- toward a second position on the mantle surface of the first rotor in the upper rotor pair, or
- toward a position on the mantle surface of the second rotor in the upper rotor pair.

The feeding of mineral melt as two substantially separate melt jets enables the use of two different mineral melts in the fibre formation in the fiberising apparatus, whereby the obtained mineral wool will contain mineral fibres with different properties, relatively uniformly distributed through the whole mineral wool material.

According to an embodiment of the invention mineral melt is simultaneously supplied both toward a first position on the mantle surface of the first rotor and toward a first position on the mantle surface of the second rotor. When further desired, the feeding can be continuous or periodic, or periodically continuous and periodically periodic, toward a second position on the first rotor. If desired, the feeding can also be directed for longer periods toward one of the rotors, and for shorter periods toward the other rotor.

According to an embodiment of the present invention mineral melt is supplied from a melting furnace is effected in the form of two melt jets toward a first and a second position on the mantle surface of the first rotor. Advantageously the first and second positions are located, seen axially, side by side on the mantle surface of the first rotor. However, alternatively they can be located one after the other in the peripheral direction on the rotor, i.e. so that they are located one after the other as seen from the highest point of the rotor along the mantle surface in the direction of rotation of the rotor. Both the first and the second position should be located as high up on the mantle surface of the rotor as possible so that the mineral melt can get the best possible hold of the mantle surface of the rotor. According to a preferred embodiment of the present invention the centre of at least one melt jet hits the mantle surface of the first rotor within a sector of 0° - 30°, preferably 0° - 15°, as seen from the highest point of the rotor in the direction of rotation of the rotor.

The first drop cascade from the first rotor hits the mantle surface of the second rotor close to the highest point of the second rotor, however, without causing any splashing, and so that the melt drops in the first drop cascade will not interfere with the supplying of a possible second mineral melt toward the mantle surface of the second rotor. Usually, the higher up the first drop cascade hits the mantle surface of the second rotor the better hold the melt drops get of the mantle surface of the second rotor. When the mineral melt gets a good hold of the second rotor's mantle surface the fiberising capacity of the second rotor will increase, and at the same time the capacity of the whole fiberising apparatus will increase.

According to an embodiment a second mineral melt can be supplied from the same or from a second melting furnace in the form of a second melt jet toward a first position on the mantle surface of the rotating second rotor. It is advantageous that the first position on the mantle surface of the second rotor is located as close to the highest point of the second rotor as possible so that the second mineral melt feeding gets a good hold of the second rotor's mantle surface. According to a preferred embodiment of the invention the centre of the second melt jet hits the mantle surface of the second rotor within a sector of 0° - 30°, preferably 0° - 15°, as seen from the highest point of the rotor in the direction of rotation of the rotor.

The second mineral melt supplied in the form of a second melt jet toward a first position on the mantle surface of the second rotor will also get some hold of the mantle surface, and then a portion of this melt is thrown out in the form of a second drop cascade, which also consists of melt drops of varying size and form and has a certain width. The drop cascade can be arranged to be thrown toward the mantle surface of the first rotor, or toward one of those rotors which are located below the upper rotor pair. If the second drop cascade is thrown toward the first rotor, then it is advantageously arranged to hit the mantle surface of the first rotor as high up as possible, however so that it does not cause any splashing or so that it will not interfere with the supplying of the first mineral melt to the first position on the mantle surface of the first rotor.

According to the described preferred embodiment the distance between the rotors is such that mainly all that mineral melt, which is supplied toward a first position on the mantle surface of the second rotor and does not get a hold of this second rotor, is thrown out toward the first rotor in the form of a drop cascade. In the similar way a large portion of the second mineral melt, which was thrown out from the second rotor and did not get a hold of the first rotor's mantle surface, will be thrown back in the form of a drop cascade toward a second hitting position on the mantle surface of the second rotor.

According to the present invention it is also possible to supply more than two melt jets toward the upper rotor pair. It is for example possible to supply two melt jets toward the mantle surface of the first rotor, and a further melt jet toward the mantle surface of the second rotor, or vice versa.

According to the invention the two jets of mineral melt which are supplied toward the upper rotor pair can originate from either a single melting furnace or from different melting furnaces. If both melt jets come from the same furnace, the second melt jet can be cooled before it is supplied toward the upper rotor pair, if required. The cooling changes the viscosity of the mineral melt, whereby also the properties of the mineral melt at the fibre formation will change. The warmer mineral melt generates thin and short mineral fibres providing, among other things, good thermal insulation properties to the produced mineral wool. The cooled mineral melt on the other hand generates coarse and long mineral fibres which provide improved strength properties to the produced mineral wool. Thus it is possible to make mineral fibres of two different kinds from a single mineral melt, which then provides versatile physical properties to the produced mineral wool, which can be tailored to meet the requirements of the final use.

According to the description above the feeding of melt can thus be made toward the mantle surfaces, both of the first and of the second rotor. The melt can be supplied to the two rotors in a continuous manner, or if desired periodically so that mineral melt is first supplied in the form of a melt jet toward a first position on the mantle surface of the first rotor during a given period, and then the melt feeding toward the mantle surface of the first rotor is discontinued and the melt feeding is initiated toward a first position on the mantle surface of the second rotor. After a given period the feeding of melt toward the mantle surface of the second rotor is discontinued, and melt feeding toward the first rotor is commenced. Usually the certain period during which mineral melt is fed to the respective rotor is relatively short, i.e. the frequency of varying the melt feeding between the first and second rotor is high. The melt feeding frequency depends for example on which properties are sought for in the mineral wool. The melt feeding frequency can be freely varied as required. The melt feeding can also be effected at intervals, if desired.

An example of the possibilities offered by the present invention is that a first mineral melt, a so-called base melt, can be led toward a first position on the mantle surface of the first rotor, whereby this base melt has a relatively constant chemical composition and viscosity. Then a second mineral melt, a so-called additional melt is led toward a second position on the mantle surface of the second rotor, whereby the composition of this additional melt can be selected according to the properties desired of the produced mineral wool. Alternatively both melts can be supplied toward the mantle surface of the first rotor. Feeding of the second mineral melt, the additional melt, can be arranged so that, when required, the second mineral melt can be easily replaced by a third mineral melt with a different composition and/or different properties. This results in a relatively simple and rapid change of quality of the produced mineral wool.

According to the invention it is possible to feed with both melt jets an equal quantity of mineral melt toward both rotors in the upper rotor pair, in other words, both melt jets can have substantially the same mass flow. But if desired, both melt jets can as well supply different quantities of melt toward the rotors in the upper rotor pair. This is the case for example when different mineral melts are supplied to the first rotor and to the second rotor, whereby the first mineral melt is a base melt and the second melt is an additional melt. Then the mass flows of the melt jets can be dimensioned so that the obtained mineral wool contains mineral fibres originating in the base melt and in the additional melt in correct proportions, so that the desired mineral wool properties are obtained.

Control of the mass flow of the additional melt and/or of the base melt can be utilised in order to achieve the desired properties of the mineral wool, even when both supplied melt jets have the same chemical composition. By using two mineral melts with different viscosities there can according to the invention be produced mineral wool having a tailored distribution of the length and/or thickness of the mineral fibres.

According to a further embodiment of the present invention, those mineral melts which are supplied toward the upper rotor pair have different chemical compositions and/or different chemical and/or physical properties, such as temperature, viscosity and surface tension. This results in that in the fiberising apparatus there can simultaneously be made two different kinds of mineral fibres, i.e. fibres having different chemical and/or physical properties. However, as these mineral fibres are made simultaneously in the fiberising apparatus they will become relatively uniformly distributed in the produced mineral wool. This provides an additional possibility to vary the properties of the produced mineral wool in a novel and versatile way.

Cooling of the melt jet changes its viscosity. As was described above relatively coarse mineral fibres which suitably can act as reinforcement fibres in the mineral wool are produced from the cooled mineral melt. The proportion of these reinforcement fibres in the mineral wool can be controlled by controlling the mass flows in the feeding of the different melt jets. With the present invention it is thus possible to produce mineral wool which mainly comprises of thin and short mineral fibres and a predetermined smaller proportion of strong reinforcement fibres.

If the same mineral melt is fed to both rotors in the upper rotor pair without cooling one of the melt jets, this provides a mineral wool having properties which not substantially differ from those of a mineral wool made in conventional fiberising apparatuses with feeding of one melt jet. However, separate melt feeding to both rotors in the upper rotor pair can be used for example in such cases where a fiberising apparatus intended for a high melt capacity is used, but where due to some reason the total quantity of supplied melt is relatively low, for example about 5 ton/h or less. A separate melt feeding to both rotors can stabilize the fiberising conditions in the fiberising apparatus, in that separate feeding of melt jets on the rotors generate steady melt rings on both rotors in the upper rotor pair.

According to a further embodiment of the present invention a control means can be used at the melt feeding. The control means is usually a control rotor which has a considerably smaller diameter than the other rotors in the fiberising apparatus. Its diameter is advantageously about 50 to 75 % of the first rotor's diameter. The control means is placed above the first rotor pair, and its function is to control the mineral melt which is supplied from the melting furnace in the form of a melt jet in an advantageous manner toward the first position on the mantle surface of the first rotor. The peripheral velocity of the control means can be varied, advantageously it is relatively low, 5 to 50 m/s, but it may have a rotational velocity similar to the rotational velocity of the other rotors.

A fiberising apparatus according to the invention can utilise rotors of different sizes. In the rotor series the subsequent rotor has usually a larger diameter than the previous rotor, but this is not necessary in all cases. According to a preferred embodiment of the present invention all rotors in the fiberising apparatus are relatively large, and quite like each other. The first rotor in the upper rotor pair can be relatively large, larger than typically in conventional fiberising apparatuses. The first rotor can be equally large as the second rotor, or in some cases somewhat larger than the second rotor. In a typical fiberising apparatus according to the invention the size of the second rotor is 0.9 to 1.2, the size of the third rotor 0.9 to 1.3, and the size of the fourth rotor 1.0 to 1.4, times the size of the first rotor.

The sizes of the rotors and their mutual distances can be selected according to the quantity of melt supplied, i.e. according to the desired fiberising capacity. The larger the rotors, the higher the fiberising capacity of the fiberising apparatus is. Fiberising capacity means how much melt there can be fed to a fiberising apparatus until it is overloaded. A fiberising apparatus according to the invention is particularly well suited for supplying large quantities of melt, but by selecting smaller rotor sizes than usually it can also be used with small quantities of melt.

According to a preferred embodiment of the present invention there is a melt ring on each rotor, but in some special cases the fiberising apparatus can operate so that all rotors do not have a continuous and uniform melt ring on their mantle surfaces.

With the aid of the invention it is possible to minimize the quantity of melt leaving a fiberising apparatus in the form of a drop cascade from the space between the third and fourth rotors. This drop cascade results mainly in shot and unfiberized material, so minimising it will improve the total efficiency of the fiberising apparatus. A typical efficiency of a fiberising apparatus according to the present invention is about 85 to 95 %, calculated as the quantity of produced mineral wool divided by the quantity of melt feeding. In other words, one can note that by using a fiberising apparatus according to the present invention it is possible to reach a yield which is 5 to 15 percent units higher than in conventional fiberising apparatuses, calculated as the quantity of produced mineral wool divided by the quantity of mineral melt feeding.

In order to utilise maximally the mineral melt's hold of the first rotor's mantle surface it is advantageous to provide the first rotor with a primary blow-off means, which extends over a large portion of the rotor's periphery, however without interfering with the feeding of melt or drop cascades. The primary blow-off means comprises blow-off slits arranged around the periphery of the rotor. The total length of the primary blow-off means is advantageously 30 to 70 %, more advantageously 50 to 70 % of the periphery of the first rotor. Then the length of the blow-off means around the periphery of the first rotor is usually 350 to 750 mm, advantageously 450 to 650 mm.

According to a preferred embodiment of the invention the blow-off is substantially axial from the upper part of the first rotor at the end of the blow-off means, as seen in the direction of rotation of the rotor. The axial blow-off calms down the melt ring on the mantle surface of the rotor, so that the melt ring is kept low at the first position where the melt jet hits the mantle surface. At the same time the relatively strong axial blow-off will reduce the interfering effect on the melt jet caused by the air rotating with the rotor. According to a preferred embodiment of the present invention the region of the axial blow-off comprises a distance of about 10° to 50°, advantageously 25° to 35° of the circumference of the first rotor.

The other rotors in the fiberising apparatus according to the present invention are advantageously provided with primary blow-off means having a total length of 40 to 80 % in relation to the periphery of the rotor. According to a preferred embodiment the length of the primary blow-off means around the mantle of the rotor is advantageously as large as possible without interfering with the feeding and throwing of the mineral melt, i.e. with the drop cascades, between the different rotors.

The total length of all blow-off means, including the blow-off means at the first rotor, can be 1500 to 3500 mm, more advantageously 2000 to 3000 mm.

According to the invention it is also advantageous to use a high primary blow-off velocity at all rotors, typically 80 to 330 m/s, advantageously 100 to 250 m/s. This contributes to the fiberising from the mantle surfaces of the rotors, and the losses in the form of unfiberised material are reduced. According to the invention it is not necessary to use a separate secondary blow-off, but that is possible if desired. A secondary blow-off can be arranged with the aid of separate blow-off means on the outer sides of the primary blow-off means and around the actual fiberising apparatus.

In a fiberising apparatus according to the present invention it is possible to use conventional rotational velocities, that is peripheral velocities of about 30 to 150 m/s, but also much higher velocities, for example up to 250 - 330 m/s. The used peripheral velocities may be adjusted to suit the properties of the mineral melt in use. For example, if the mineral melt has a high viscosity a high rotational velocity is required in order to achieve a satisfactory fibre quality. Otherwise the stiff melt will not be sufficiently distributed at the mantle surfaces of the rotors, which results in formation of melt shot in large amounts, and in a lower quality. According to the present invention it is also possible to influence the physical properties of the mineral fibres by choosing the peripheral velocities of the rotors. The higher peripheral velocity is used, the thinner the obtained mineral fibres are.

Both the peripheral velocities of the rotors and the used rotor sizes have an influence on the capacity of the fiberising apparatus according to the invention. With a suitable choice of these parameters, among other things, it is possible to use the fiberising apparatus as well for the feeding of smaller melt quantities, for example 5 ton/h, for usual quantities of melt, for example 7 ton/h, as for large melt quantities, for example 9 ton/h or larger.

According to a preferred embodiment of the present invention the fiberising apparatus has an open front profile. Here an "open front profile" means that the fiberising apparatus does not have a front plate in which the rotors are arranged. The open profile facilitates air flow around the rotors and reduces harmful turbulence which interferes with the fiberising on the mantle surfaces of the rotors. Therefore the open front profile facilitates the fibre transport from the fiberising apparatus toward the collecting surface. In conventional fiberising apparatuses with a front plate, a strong negative pressure is created for example below the second rotor in the upper rotor pair. This region in conventional fiberising apparatuses easily accumulates impurities, such as shot and other scrap which adheres to the front plate, from which they then come loose and end up in the produced mineral wool. In the fiberising apparatus according to the present invention problems of that kind will not occur thanks to the open front profile, as secondary air can freely flow below the second rotor in the upper rotor pair from the side of the fiberising apparatus. Secondary air can freely flow around all spinning rotors and in between the upper and lower rotor pair over a distance of 0 to 400 mm, advantageously over a distance of 100 to 300 mm, more advantageously over a distance of 150 to 300 mm, as measured from the rear edges of the spinning rotor. A rear edge of a spinning rotor means here that rotor edge which is located farther away from the collecting chamber and from the col-chamber and from the collecting means. With the fiberising apparatus according to the invention having an open front profile one obtains mineral wool where the amount of impurities is minimised.

According to an advantageous embodiment of the present invention at least the mantle surface of the first and second rotors in the fiberising apparatus is grooved. The depth of the grooves can be chosen for example depending on how close to each other the two rotors are located in the upper rotor pair. The closer the first and second rotors are arranged in the upper rotor pair the deeper the grooves can be on the mantle surfaces of the rotors. However, usually the groove depth is about 0 to 4 mm, advantageously 1 to 3 mm. The use of grooved mantle surfaces prevents the melt drops from being retarded in the gap between the first and the second rotor, as the grooves facilitate the passage of both melt drops and air in the gap between the upper rotors. The grooves also increase the area of the mantle surfaces of the rotors, improve the fibre formation on them, and prevent splashing. According to the present invention it is also possible to provide one or more of the other rotors below the upper rotor pair with grooves, for example the third and/or the fourth rotor, if desired.

Even if the rotors may be grooved their mantle surfaces are substantially planar surfaces in the axial direction of the rotors. The mantle surfaces of the rotors are not conical, convex, concave nor zigzag-formed. Thus any possible grooves are small, relatively low surface grooves. In case the mantle surface of the rotors is grooved, the plane of the mantle surface is defined by the peaks of the grooves. In the case that both the first and the second rotor are grooved the shortest distance between them is measured between the peaks of the grooves.

Binder is applied on the formed mineral fibres in a conventional manner, either during the fibre formation or after it. The binder can for example be applied on mineral fibres which are blown off the mantle surfaces of the rotors with the aid of central nozzles arranged on the front side of the rotors. According to the invention binder can be applied at all rotors, even at the first rotor.

Some embodiments of the present invention are described in more detail below with reference to the enclosed figures, in which
Figure 1 shows schematically a front view of a conventional fiberising apparatus,
Figure 2 shows schematically how the rotors in the upper rotor pair and the third rotor can be located in a fiberising apparatus according to a preferred embodiment of the present invention,
Figure 3 shows schematically in a front view a preferred embodiment of a fiberising apparatus for the making of mineral wool fibres according to the present invention,
Figure 4 shows schematically an alternative embodiment of the fiberising apparatus in figure 3,
Figure 5 shows schematically an alternative embodiment of the present invention with mineral melt feeding toward both rotors in the upper rotor pair,
Figure 6 shows schematically an other embodiment of the present invention with mineral melt feeding in the form of two melt jets toward the first rotor,
Figure 7A shows schematically a conventional way to supply mineral melt to a fiberising apparatus,
Figures 7B to E show schematically different embodiments according to the present invention with several mineral melt feedings to a fiberising apparatus,
Figure 8 shows schematically in a front view a further embodiment of a fiberising apparatus for the making of mineral wool fibres according to the present invention with feeding of several melts.

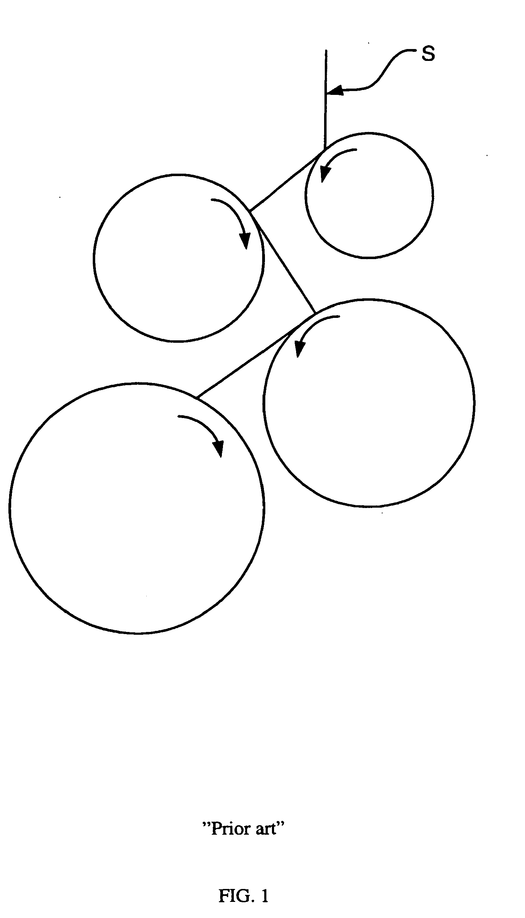

Figure 1 shows schematically a conventional fiberising apparatus comprising four rotors. The melt path S of the mineral melt from one rotor to the next one is designed so that the melt jet hits each rotor only once.

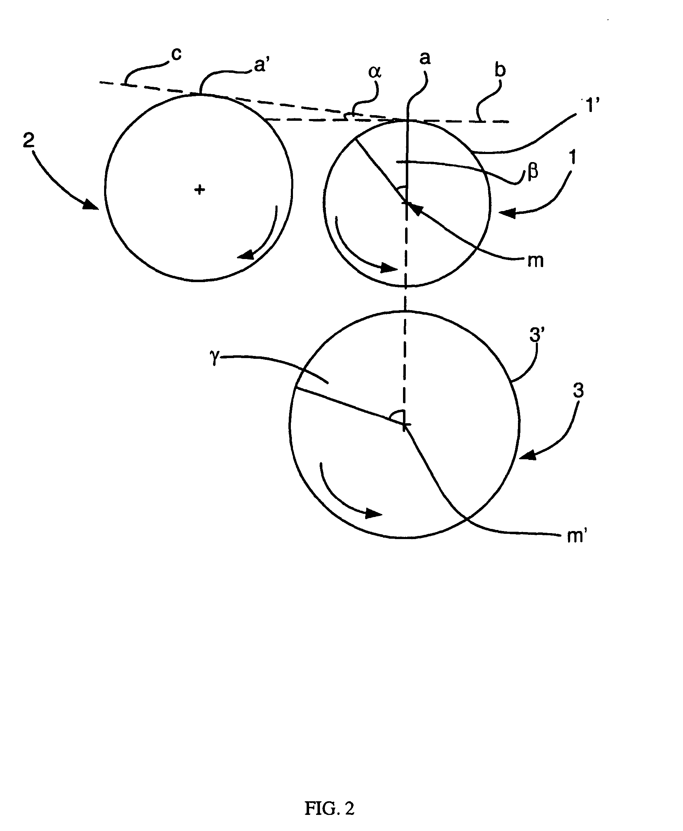

Figure 2 shows how the first and second rotors in the upper rotor pair and the third rotor are located in a fiberising apparatus according to a preferred embodiment of the invention. The first and second rotors in the upper rotor pair rotate toward each other, and the rotation directions of the rotors are shown by arrows in the figure. A horizontal base line b is drawn through the highest point a on the first rotor 1. The second rotor 2 is placed so that a line c drawn through the highest points a, a' on the first and second rotors forms an angle α of ±10°, preferably ±5°, with the base line b, and so that the distance between the mantle surfaces of the first and the second rotor 1, 2 is short, advantageously 5 to 15 mm, typically 9 to 11 mm. According to the invention the third rotor 3 is arranged below the upper rotor pair so that the drop cascade, not shown in figure 2, from the upper rotor pair will hit the mantle surface 3' of the third rotor 3 within a sector γ in the rotation direction of the rotor 3 from a line drawn between the centres m and m' of the first and third rotors. The sector γ is usually smaller than 60°, advantageously 25° to 40°.

Figure 2 also shows the sector β, in which the centre of the melt jet, not shown in the figure, hits the mantle surface 1' of the first rotor 1 according to an advantageous embodiment of the present invention. The sector β is usually 0° to 30°, preferably 0° to 15°, in the rotation direction of the rotor 1 from a line drawn through the centre m of the rotor and its highest point a.

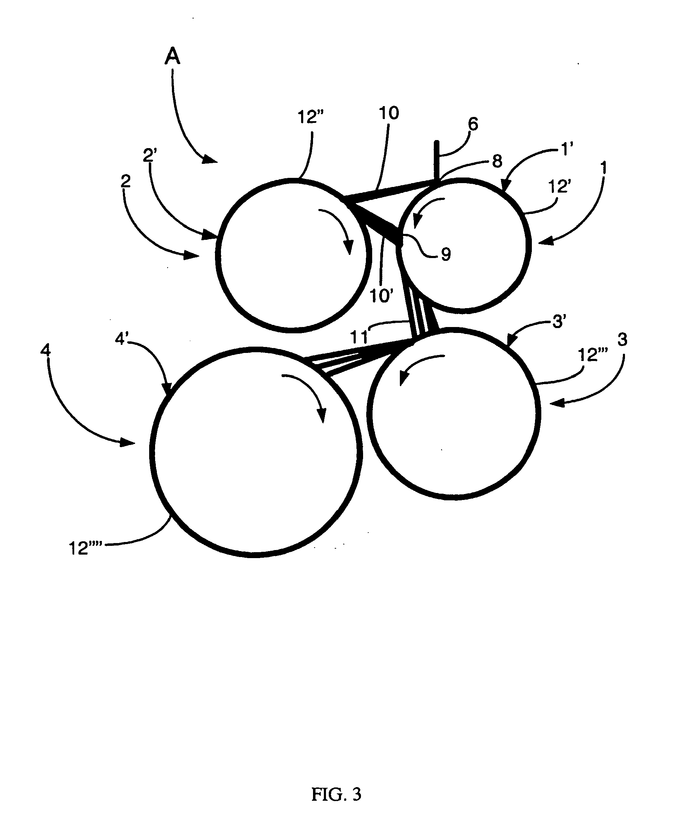

Figure 3 shows schematically a preferred embodiment of a fiberising apparatus according to the present invention for the making of mineral wool fibres. The fiberising apparatus A comprises a first fiberising rotor 1 with the diameter 290 mm, a second fiberising rotor 2 with the diameter 300 mm, a third fiberising rotor 3 with the diameter 320 mm, and a fourth fiberising rotor 4 with the diameter 340 mm. The rotors in the rotor pairs 1-2 and 3-4 rotate toward each other. Narrow gaps are formed between the rotors in the rotor pairs. The direction of rotation of the fiberising rotors 1, 2, 3 and 4 are shown by arrows.

A melt jet 6 hits a first position 8 on the mantle surface 1' of the first rotor 1. From the first rotor's 1 mantle surface 1' melt drops are thrown out in the form of a drop cascade 10 toward the mantle surface 2' of the second rotor 2. A portion of the melt drops get a sufficiently good hold of the mantle surface 2' of the second rotor 2, and can be formed into fibres here. A portion of the melt which did not get a sufficiently good hold of the mantle surface 2' of the second rotor 2 is thrown in the form of a drop cascade 10', mainly back to the mantle surface 1' of the first rotor 1, toward a second position 9 downstream from the first position 8. A portion of the melt thrown back will gain a sufficiently good hold of the mantle surface 1' of the first rotor 1, and can be formed into fibres here. A portion of the melt thrown back will be thrown out toward the third rotor's 3 mantle surface 3' in the form of a drop cascade 11. Thereby a portion of the melt is formed into fibres at the mantle surface 3' of the third rotor 3, and a portion is thrown out toward the mantle surface 4' of the fourth rotor 4, and can be formed into fibres here. Figure 3 shows schematically also rings of melt, the melt rings 12', 12", 12''', 12"" on the mantle surfaces 1', 2', 3', 4' of the fiberising rotors 1, 2, 3, 4. The thickness of the melt rings is exaggerated in the figure for the sake of clarity. The blow-off means are not drawn at the rotors in figure 3.

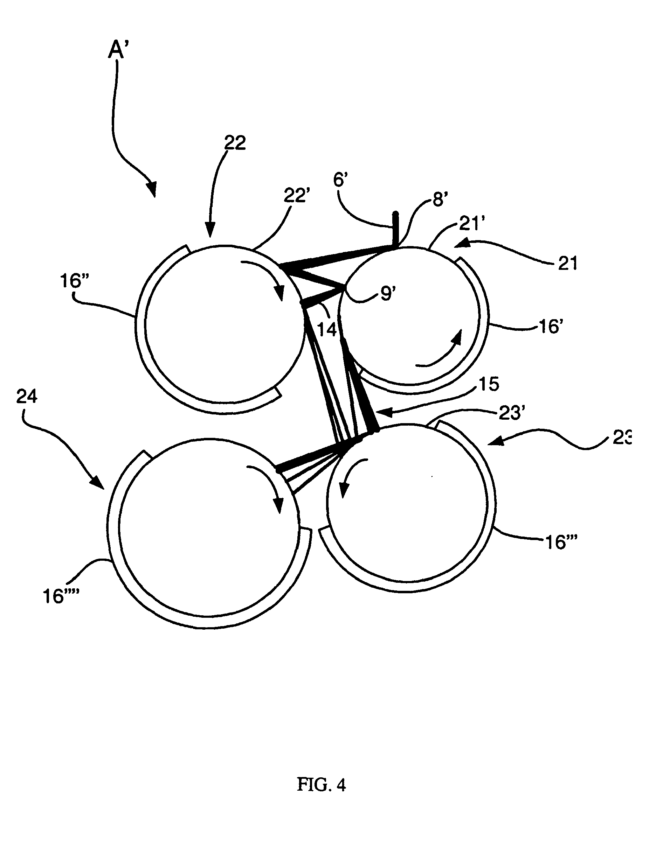

Figure 4 shows an alternative embodiment of the present invention. The fiberising apparatus A' comprises four fiberising rotors 21, 22, 23, 24 with the directions of rotation shown by arrows. A melt jet 6' hits a first position 8' on the mantle surface 21' of the first rotor 21, from where the melt is thrown out toward the mantle surface 22' of the second rotor 22. Then according to the invention a portion of the melt which is not formed into fibres is thrown back toward a second position 9' on the mantle surface 21' of the first rotor 21. In the fiberising apparatus A' the fiberising rotors 21, 22 in the upper rotor pair are placed so that the part of the returned melt which does not get a sufficient hold of the mantle surface 21' of the first rotor 21 is thrown a second time back toward the mantle surface 22' of the second rotor 22 in the form of a drop cascade 14. Also a portion of this melt can thereby be formed into fibres at the mantle surface 22' of the second rotor 22, and a portion will be thrown out toward the third rotor's 23 mantle surface 23'. That drop cascade 15 which is thrown out toward the third rotor's 23 mantle surface 23' downward from the upper rotor pair is formed by melt drops which come both from the first rotor 21 and from the second rotor 22. Figure 4 shows also blow-off means 16', 16", 16"', 16"" around the fiberising rotors. The melt rings on the mantle surfaces of the fiberising rotors are not drawn in this figure.

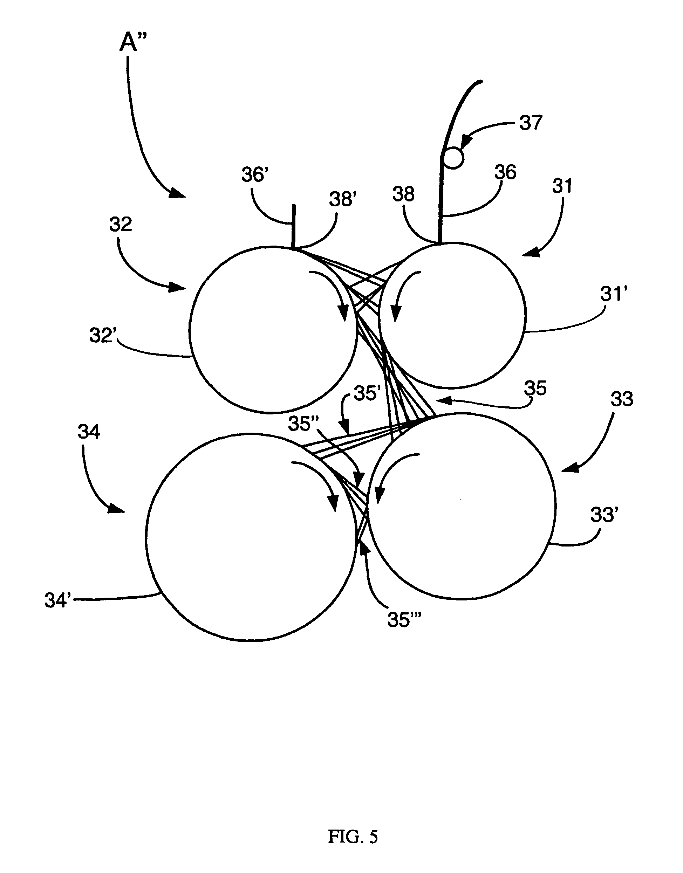

Figure 5 shows another alternative embodiment according to the present invention where the feeding of mineral melt is effected toward both rotors 31, 32 in the upper rotor pair. The fiberising apparatus A" comprises four fiberising rotors 31, 32, 33, 34, and their directions of rotation are indicated by arrows. Two different melt jets 36, 36' are supplied toward the rotors 31, 32 in the upper rotor pair where they hit the mantle surfaces 31' and 32' of the rotors 31 and 32 at the positions 38 and 38'. A control means 37 directs the first melt jet 36 toward the first position 38 on the mantle surface 31' of the first rotor 31. The mineral melts which were supplied to the mantle surfaces of the rotors are then successively thrown out from one rotor to the other and back in the gap between the rotors 31, 32 in the upper rotor pair. At the same time a portion of the mineral melts gets a hold of the mantle surfaces 31', 32' of the rotors 31, 32, and there it is formed into mineral fibres. The drop cascade 35, which is thrown out toward the mantle surface 33' of the third rotor 33 downward from the upper rotor pair, is formed by melt drops originating at the two rotors 31, 32 in the upper rotor pair. A portion of the melt is then formed into fibres at the mantle surface 33' of the third rotor 33, and a portion is thrown out in the form of a drop cascade 35' toward the mantle surface 34' of the fourth rotor 34, and there it may be formed into mineral fibres. Such melt which did not get a hold of the fourth rotor's 34 mantle surface 34' can be thrown out toward the mantle surface 33' of the third rotor 33, and again back in the form of a drop cascade 35", 35"'.

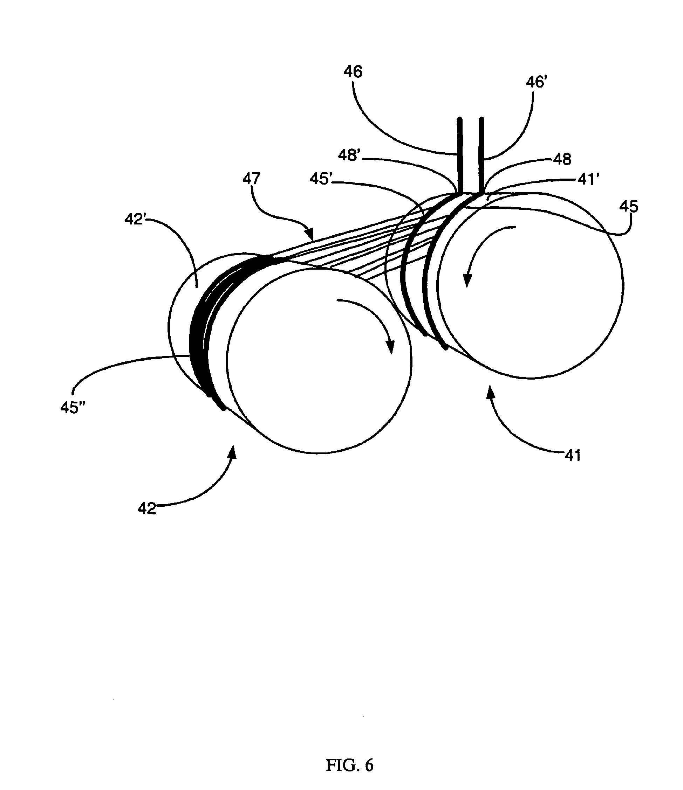

Figure 6 shows still another alternative embodiment of the present invention where the supply of mineral melt is done in the form of two melt jets 46, 46' toward the first rotor 41 in the upper rotor pair. The melt jets 46, 46' hit the mantle surface 41' of the first rotor 41 at two different first positions 48, 48' located side by side. The melt jets may also be arranged to hit the mantle surface of the first rotor at two axially different positions, after one another in the rotor's direction of rotation on the mantle surface of the rotor. The supply of mineral melts form two melt rings 45, 45' on the first rotor. The mineral melt is thrown out toward the mantle surface 42' of the second rotor 42 in the form of a drop cascade 47 and forms a melt ring 45" on the mantle surface 42' of the second rotor 42. For the sake of clarity only the upper rotor pair of the fiberising apparatus is shown in the figure, and the distance between the rotors is exaggerated. Also the figure does not show the mineral melt which is thrown back toward the mantle surface 41' of the first rotor 41 from the mantle surface 42' of the second rotor 42.

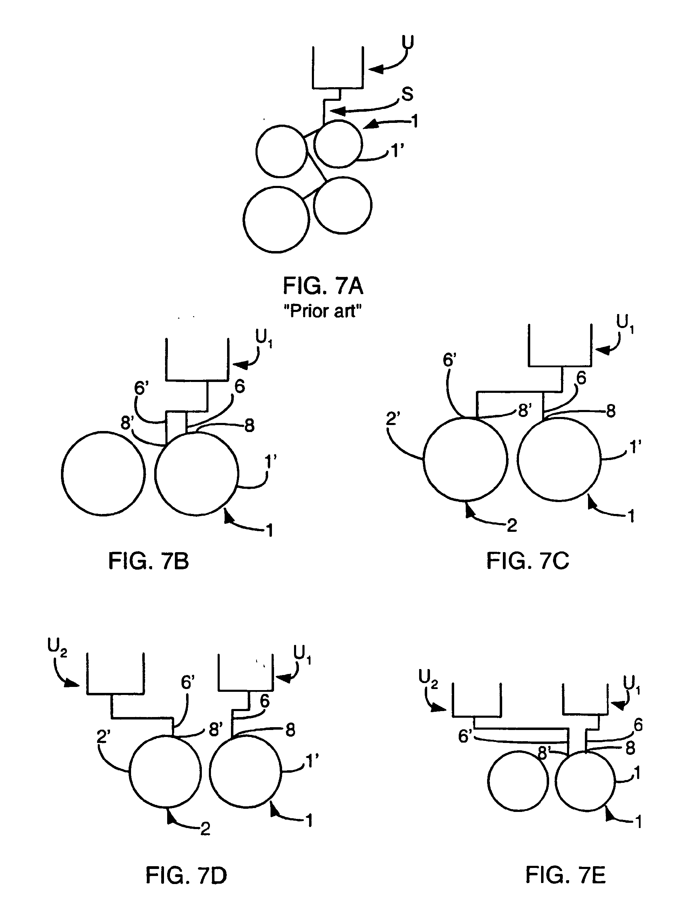

Figure 7A shows schematically a conventional way to supply mineral melt to a fiberising apparatus. Mineral melt from a melting furnace U is supplied in the form of a melt jet S toward a first position on the mantle surface 1' of the first rotor 1 in the fiberising apparatus. The melt is transported relatively low on each rotor, and without being thrown back to the previous rotor.

Figures 7B to 7E show different embodiments of the present invention where several melts are supplied to the fiberising apparatus. For the sake of clarity the figures show only the upper rotor pair of the fiberising apparatus, but it is understood that the fiberising apparatus can comprise more rotors than these figures show.

Figure 7B shows schematically an embodiment where mineral melt is supplied from a melting furnace U₁ in the form of two melt jets 6, 6' toward a first position 8 and toward a second position 8' on the mantle surface 1' of the first rotor 1. The melt jets 6, 6' can hit the mantle surface 1' of the first rotor lat a first position 8 and a second position 8', which are arranged adjacent each other either peripherally or axially. For the sake of clarity the jets in the figure are drawn peripherally one after the other.

Figure 7C shows another alternative embodiment where mineral melt is supplied from a melting furnace U₁ in the form of two melt jets 6, 6' toward a first position 8 on the mantle surface 1' of the first rotor 1 and toward a position 8' on the mantle surface 2' of the second rotor 2.

Figure 7D shows a further embodiment where a first mineral melt is supplied from a first melting furnace U₁ in the form of a first melt jet 6 toward a first position 8 on the mantle surface 1' of the first rotor 1, and a second mineral melt from a second melting furnace U₂ is supplied in the form of a second melt jet 6' toward the mantle surface 2' of the second rotor 2.

Figure 7E shows still another embodiment of the present invention where a first mineral melt is supplied from a first melting furnace U₁ in the form of a first melt jet 6 toward a first position 8 on the mantle surface 1' of the first rotor 1, and a second mineral melt is supplied from a second melting furnace U₂ in the form of a second melt jet 6' also toward the mantle surface 1' of the first rotor 1.

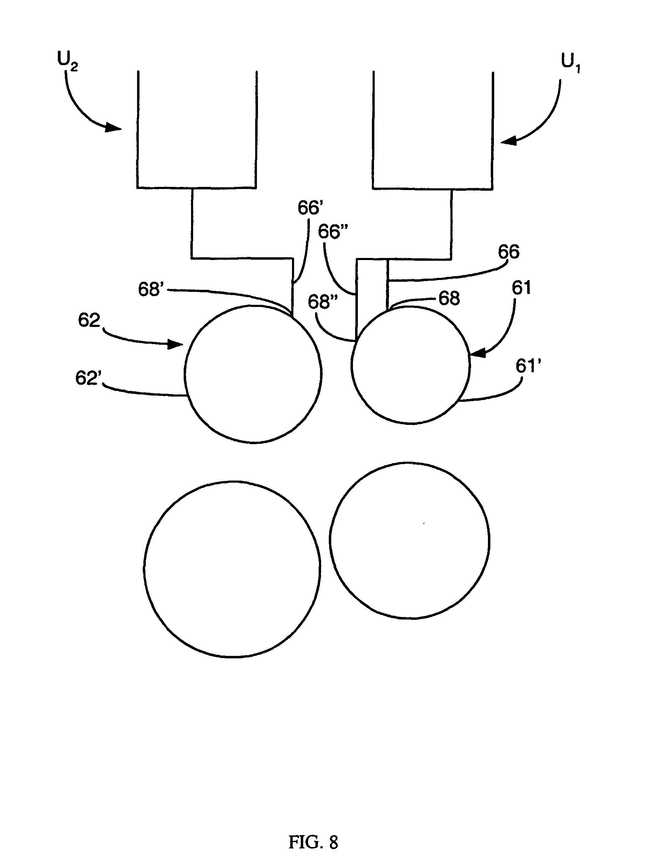

Figure 8 shows schematically in a front view a further embodiment of the fiberising apparatus for the making of mineral wool fibres according to the present invention, where several melts are supplied to a fiberising apparatus. A first mineral melt is supplied from a first melting furnace U₁ in the form of a first melt jet 66 toward a first position 68 on the mantle surface 61' of the first rotor 61, and a second mineral melt from a second melting furnace U₂ is supplied in the form of a second melt jet 66' toward a first position 68' on the mantle surface 62' of the second rotor 62. Further a third melt jet 66' is supplied from the first melting furnace U₁ toward a second position 68" on the mantle surface 61' of the first rotor 61.

By using the method and the fiberising apparatus according to the present invention in the making of mineral wool fibres, the production capacity of mineral wool fibres can be considerably increased compared to conventional fiberising apparatuses. With the invention the capacity can be increased, so that the quality of the produced fibre material is kept at a high level. It is possible to produce fibre material containing a smaller amount of shot and to obtain a high fibre content in the produced fibre material.

Even if the invention was described with reference to what is presently considered to be the most practical and preferred embodiments, it must be understood that the invention shall not be limited to the above-described embodiments, but that it is intended to include also different modifications and equivalent technical solutions within the scope of the enclosed claims.

## Claims

1. A method for the manufacture of mineral wool with a fiberising apparatus comprising rotating rotors, for the forming of mineral melt into fibres, of which rotors a first and a second rotor rotating toward each other form an upper rotor pair, and at least one rotor, preferably a rotor pair, is arranged below the upper rotor pair, whereby
- mineral melt is supplied from a melting furnace or the like in the form of a melt jet toward a first position on the mantle surface of the first rotor,
- mineral melt is thrown out from the mantle surface of the first rotor in the form of a drop cascade toward the mantle surface of the second rotor,
- a first portion of mineral melt is formed into fibres at the second rotor and is blown off the rotor, and
- a second portion of mineral melt is thrown out from the second rotor in the form of a drop cascade,
**characterised in that**
- at least 60 weight-% of that drop cascade, which is thrown out from the second rotor is arranged to be thrown toward the mantle surface of the first rotor, toward a second position downstream from said first position on the mantle surface,
- a portion of mineral melt is formed into fibres at the first rotor and blown off the rotor, and that
- the first rotor in the upper rotor pair is provided with blow-off means for blowing off mineral melt formed into fibres from the mantle surface of the rotor.

2. A method according to claim 1, **characterised in that** the centre of the melt jet is arranged to hit the mantle surface of the first fiberising rotor close to the highest point of the rotor, preferably within a sector of 0° to 30°, as seen from the highest point of the rotor forward in the direction of rotation of the rotor, typically within a sector of 0° to 15°.

3. A method according to claim 1, **characterised in that** fibre blow-off of fibres is arranged at the first periphery of the rotor, over a distance of 30 to 70 %, advantageously over 50 to 70 % of its periphery.

4. A method according to claim 1, **characterised in that** the blow-off at the first rotor in the upper rotor pair is axial in a sector of 10° to 50°, advantageously 25° to 35° of the periphery of the first rotor.

5. A method according to claim 1, **characterised in that** binder is applied on fibres which are blown off the first rotor.

6. A method according to claim 1, **characterised in that** in addition mineral melt is supplied in the form of a second melt jet
- toward a second position on the mantle surface of the first rotating rotor in the upper rotor pair, or
- toward the mantle surface of the second rotating rotor in the upper rotor pair.

7. A method according to claim 6, **characterised in that** the melt of the first and the second melt jets have different chemical compositions and/or have different chemical and/or physical characteristics, such as viscosity, temperature and surface tension.

8. A fiberising apparatus for the manufacture of mineral wool comprising rotating rotors for forming mineral melt into fibres, of which rotors a first and a second rotor rotating toward each other form an upper rotor pair, and at least one rotor, preferably a rotor pair, is arranged below the upper rotor pair, whereby
- the first rotor of the upper rotor pair has a mantle surface,
- toward which mineral melt from a melting furnace or the like is arranged to be supplied in the form of a melt jet, and
- from which mineral melt is thrown out in the form of a drop cascade toward the second rotor in the upper rotor pair,
- the second fiberising rotor of the upper rotor pair has a mantle surface,
- at which a portion of the mineral melt is formed into fibres, and
- from which a portion of the mineral melt is thrown out in the form of a drop cascade,
and blow-off means for blowing off fibres from the mantle surfaces,
**characterised in that**
- the minimum distance between the mantle surfaces of the first and second rotors in the upper rotor pair is 5 to 15 mm, typically 9 to 11 mm, and that
- the first rotor in the upper rotor pair is provided with blow-off means for blowing off the mineral melt formed into fibres from the mantle surface of the rotor.

9. A fiberising apparatus according to claim 8, **characterised in that** the first and the second rotors in the upper rotor pair are arranged in relation to each other so that the main part of the drop cascade thrown out from the mantle surface of the second rotor hits the mantle surface of the first rotor.

10. A fiberising apparatus according to claim 8, **characterised in that** the highest point of the second rotor is located on a level of ± 10°, preferably ± 5°, from the level of the highest point of the first rotor.

11. A fiberising apparatus according to claim 8, **characterised in that** the highest points of the first and second rotors are located approximately on the same level.

12. A fiberising apparatus according to claim 8, **characterised in that** blow-off means are arranged at the periphery of the first rotor, over a distance of 30 to 70 %, preferably over 50 to 70 % of the periphery thereof.

13. A fiberising apparatus according to claim 8, **characterised in that** blow-off means are arranged at the periphery of the first rotor, over a distance of 350 to 750 mm, preferably over 450 to 650 mm.

14. A fiberising apparatus according to claim 8, **characterised in that** the blow-off from blow-off means at the first rotor in the upper rotor pair is arranged axially in a sector of 10° to 50°, preferably 25° to 35° of the periphery of the first rotor.

15. A fiberising apparatus according to claim 8, **characterised in that** blow-off means are arranged on the peripheries of the other rotors over a distance of 40 to 80 % of the respective rotor.

16. A fiberising apparatus according to claim 8, **characterised in that** the total length of the blow-off means is 1500 to 3500 mm, more advantageously 2000 to 3000 mm.

17. A fiberising apparatus according to claim 8, **characterised in that** the third rotor is arranged below the upper rotor pair so that mineral melt thrown out downward from the gap between the rotors in the upper rotor pair hits the mantle surface of the third rotor close to the highest point of the third rotor, within a sector of 60°, preferably 25° to 40° from the highest point of the rotor forward in the rotor's direction of rotation.

18. A fiberising apparatus according to claim 8, **characterised in that** the blow off velocity at the rotors is 80 to 330 m/s, preferably 100 to 250 m/s.

19. A fiberising apparatus according to claim 8, **characterised in that** the peripheral velocity of the rotors is less than 330 m/s, preferably 30 to 250 m/s.

20. A fiberising apparatus according to claim 8, **characterised in that** the mantle surfaces of the first and second rotors are grooved.

21. A fiberising apparatus according to claim 8, **characterised in that** the mantle surfaces of the third and/or the fourth rotor are grooved.

22. A fiberising apparatus according to claim 8, **characterised in that** the fiberising apparatus has an open profile.

23. A fiberising apparatus according to claim 8, **characterised in that** control means for directing the mineral melt toward a first position on the mantle surface of the first rotor are arranged above the upper rotor pair.

24. A fiberising apparatus according to claim 8, **characterised in that** the fiberising apparatus further comprises
- means for directing a second melt jet
- toward a second position on the mantle surface of the first rotor in the upper rotor pair, or
- toward a position on the mantle surface of the second rotor in the upper rotor pair.

## Patentansprüche

1. Verfahren zur Herstellung von Mineralwolle mit einer Faserherstellungsvorrichtung, welche rotierende Rotoren zur Ausbildung von Mineralschmelze zu Fasern umfasst, wobei ein erster und ein zweiter Rotor, welche aufeinander zu rotieren, der Rotoren ein oberes Rotorenpaar ausbilden, und wobei wenigstens ein Rotor, bevorzugt ein Rotorenpaar, unter dem oberen Rotorenpaar angeordnet ist, wobei
- Mineralschmelze von einem Schmelzofen oder Ähnlichem in der Form eines Schmelzestrahls in Richtung einer ersten Position auf der Manteloberfläche des ersten Rotors zugeführt wird,
- Mineralschmelze von der Manteloberfläche des ersten Rotors in der Form einer Tropfenkaskade in Richtung der Manteloberfläche des zweiten Rotors herausgeschleudert wird,
- ein erster Teil von Mineralschmelze an dem zweiten Rotor zu Fasern ausgebildet wird und von dem Rotor abgeblasen wird, und
- ein zweiter Teil von Mineralschmelze von dem zweiten Rotor in der Form einer Tropfenkaskade herausgeschleudert wird,
**dadurch gekennzeichnet,**
- **dass** wenigstens 60 Gewichtsprozent derjenigen Tropfenkaskade, welche von dem zweiten Rotor herausgeschleudert wird, angeordnet sind, um in Richtung der Manteloberfläche des ersten Rotors in Richtung einer zweiten Position stromabwärts von der ersten Position auf der Manteloberfläche geschleudert zu werden,
- **dass** ein Teil von Mineralschmelze an dem ersten Rotor zu Fasern ausgebildet wird und von dem Rotor abgeblasen wird, und
- **dass** an dem ersten Rotor in dem oberen Rotorenpaar Abblasmittel zum Abblasen von zu Fasern ausgebildeter Mineralschmelze von der Manteloberfläche des Rotors vorgesehen sind.

2. Verfahren nach Anspruch 1, **dadurch gekennzeichnet, dass** die Mitte des Schmelzestrahls angeordnet ist, um auf die Manteloberfläche des ersten Faserherstellungsrotors nahe an dem höchsten Punkt des Rotors aufzutreffen, bevorzugt innerhalb eines Bereichs von 0° bis 30° von dem höchsten Punkt des Rotors aus vorwärts in der Drehrichtung des Rotors gesehen, typischerweise in einem Bereich von 0° bis 15°.

3. Verfahren nach Anspruch 1, **dadurch gekennzeichnet, dass** ein Faserabblasen von Fasern an dem ersten Umfang des Rotors über eine Entfernung von 30 bis 70%, vorteilhaft über 50 bis 70% seines Umfangs angeordnet ist.

4. Verfahren nach Anspruch 1, **dadurch gekennzeichnet, dass** das Abblasen an dem ersten Rotor in dem oberen Rotorenpaar axial in einem Bereich von 10° bis 50°, vorteilhaft von 25° bis 35° des Umfangs des ersten Rotors ist.

5. Verfahren nach Anspruch 1, **dadurch gekennzeichnet, dass** ein Bindemittel auf Fasern, welche von dem ersten Rotor abgeblasen werden, aufgebracht wird.

6. Verfahren nach Anspruch 1, **dadurch gekennzeichnet, dass** zusätzlich Mineralschmelze in der Form eines zweiten Schmelzestrahls zugeführt wird
- in Richtung einer zweiten Position auf der Manteloberfläche des ersten rotierenden Rotors in dem oberen Rotorenpaar oder
- in Richtung der Manteloberfläche des zweiten rotierenden Rotors in dem oberen Rotorenpaar.

7. Verfahren nach Anspruch 6, **dadurch gekennzeichnet, dass** die Schmelze des ersten und des zweiten Schmelzestrahls verschiedene chemische Zusammensetzungen aufweisen und/oder verschiedene chemische und/oder physikalischen Eigenschaften, wie beispielsweise Viskosität, Temperatur und Oberflächenspannung aufweisen.

8. Faserherstellungsvorrichtung zur Herstellung von Mineralwolle, umfassend rotierende Rotoren zur Ausbildung von Mineralschmelze zu Fasern, wobei ein erster und ein zweiter Rotor, welche aufeinander zu rotieren, der Rotoren ein oberes Rotorenpaar ausbilden, und wobei wenigstens ein Rotor, bevorzugt ein Rotorenpaar, unter dem oberen Rotorenpaar angeordnet ist, wobei
- der erste Rotor des oberen Rotorenpaars eine Manteloberfläche aufweist,
- wobei Mineralschmelze von einem Schmelzofen oder Ähnlichem so angeordnet ist, dass sie in der Form eines Schmelzestrahls in Richtung auf diese zu zugeführt wird, und
- von welcher Mineralschmelze in der Form einer Tropfenkaskade in Richtung des zweiten Rotors in dem oberen Rotorenpaar herausgeschleudert wird,
- der zweite Faserherstellungsrotor des oberen Rotorenpaars eine Manteloberfläche aufweist,
- an welcher ein Teil der Mineralschmelze zu Fasern ausgebildet wird, und
- von welcher ein Teil der Mineralschmelze in der Form einer Tropfenkaskade herausgeschleudert wird,
und Abblasmittel zum Abblasen von Fasern von den Manteloberflächen,
**dadurch gekennzeichnet,**
- **dass** die Minimalentfernung zwischen den Manteloberflächen des ersten und zweiten Rotors in dem oberen Rotorenpaar 5 bis 15 mm, typischerweise 9 bis 11 mm, ist, und
- **dass** an dem ersten Rotor in dem oberen Rotorenpaar Abblasmittel zum Abblasen der zu Fasern ausgebildeten Mineralschmelze von der Manteloberfläche des Rotors vorgesehen sind.

9. Faserherstellungsvorrichtung nach Anspruch 8, **dadurch gekennzeichnet, dass** der erste und zweite Rotor in dem oberen Rotorenpaar in Beziehung zueinander so angeordnet sind, dass der Hauptteil der Tropfenkaskade, welche von der Manteloberfläche des zweiten Rotors herausgeschleudert wird, auf die Manteloberfläche des ersten Rotors auftrifft.

10. Faserherstellungsvorrichtung nach Anspruch 8, **dadurch gekennzeichnet, dass** der höchste Punkt des zweiten Rotors in einer Höhenlage von ±10°, bevorzugt von ±5°, von der Höhenlage des höchsten Punkts des ersten Rotors angeordnet ist.

11. Faserherstellungsvorrichtung nach Anspruch 8, **dadurch gekennzeichnet, dass** die höchsten Punkte des ersten und zweiten Rotors näherungsweise in derselben Höhenlage angeordnet sind.

12. Faserherstellungsvorrichtung nach Anspruch 8, **dadurch gekennzeichnet, dass** Abblasmittel an dem Umfang des ersten Rotors über eine Entfernung von 30 bis 70%, bevorzugt über 50 bis 70% des Umfangs desselben angeordnet sind.

13. Faserherstellungsvorrichtung nach Anspruch 8, **dadurch gekennzeichnet, dass** Abblasmittel an dem Umfang des ersten Rotors über eine Entfernung von 350 bis 750 mm, bevorzugt über 450 bis 650 mm, angeordnet sind.

14. Faserherstellungsvorrichtung nach Anspruch 8, **dadurch gekennzeichnet, dass** das Abblasen von Abblasmitteln an dem ersten Rotor in dem oberen Rotorenpaar in einem Bereich von 10° bis 50°, bevorzugt von 25 bis 35°, des Umfangs des ersten Rotors axial angeordnet ist.

15. Faserherstellungsvorrichtung nach Anspruch 8, **dadurch gekennzeichnet, dass** Abblasmittel an den Umfängen der anderen Rotoren über eine Entfernung von 40 bis 80% des jeweiligen Rotors angeordnet sind.

16. Faserherstellungsvorrichtung nach Anspruch 8, **dadurch gekennzeichnet, dass** die Gesamtlänge der Abblasmittel 1500 bis 3500 mm, vorteilhafter 2000 bis 3000 mm, ist.

17. Faserherstellungsvorrichtung nach Anspruch 8, **dadurch gekennzeichnet, dass** der dritte Rotor unter dem oberen Rotorenpaar angeordnet ist, so dass Mineralschmelze, welche von dem Zwischenraum zwischen den Rotoren in dem oberen Rotorenpaar abwärts herausgeschleudert wird, auf die Manteloberfläche des dritten Rotors nahe an dem höchsten Punkt des dritten Rotors in einem Bereich von 60°, bevorzugt von 25° bis 40° von dem höchsten Punkt des Rotors vorwärts in der Drehrichtung des Rotors auftrifft.

18. Faserherstellungsvorrichtung nach Anspruch 8, **dadurch gekennzeichnet, dass** die Abblasgeschwindigkeit an den Rotoren 80 bis 330 m/s, bevorzugt 100 bis 250 m/s ist.

19. Faserherstellungsvorrichtung nach Anspruch 8, **dadurch gekennzeichnet, dass** die Umfangsgeschwindigkeit der Rotoren weniger als 330 m/s, bevorzugte 30 bis 250 m/s ist.

20. Faserherstellungsvorrichtung nach Anspruch 8, **dadurch gekennzeichnet, dass** die Manteloberflächen des ersten und zweiten Rotors gerillt sind.

21. Faserherstellungsvorrichtung nach Anspruch 8, **dadurch gekennzeichnet, dass** die Manteloberflächen des dritten und/oder des vierten Rotors gerillt sind.

22. Faserherstellungsvorrichtung nach Anspruch 8, **dadurch gekennzeichnet, dass** die Faserherstellungsvorrichtung ein offenes Profil aufweist.

23. Faserherstellungsvorrichtung nach Anspruch 8, **dadurch gekennzeichnet, dass** Steuermittel zum Lenken der Mineralschmelze in Richtung einer ersten Position auf der Manteloberfläche des ersten Rotors oberhalb des oberen Rotorenpaars angeordnet sind.

24. Faserherstellungsvorrichtung nach Anspruch 8, **dadurch gekennzeichnet, dass** die Faserherstellungsvorrichtung weiterhin umfasst
- Mittel zum Lenken eines zweiten Schmelzestrahls
- in Richtung einer zweiten Position auf der Manteloberfläche des ersten Rotors in dem oberen Rotorenpaar oder
- in Richtung einer Position auf der Manteloberfläche des zweiten Rotors in dem oberen Rotorenpaar.

## Revendications

1. Procédé de fabrication de laine minérale avec un appareil à filer comprenant des rotors rotatifs, pour le façonnage d'une matière minérale fondue en fibres, rotors parmi lesquels un premier et un deuxième rotors tournant l'un vers l'autre forment une paire de rotors supérieurs, et au moins un rotor, de préférence une paire de rotors, est disposé en dessous de la paire de rotors supérieurs, si bien que
- une matière minérale fondue est fournie, depuis un four de fusion ou analogue, sous la forme d'un jet de matière fondue, vers une première position sur la surface de chemise du premier rotor,
- la matière minérale fondue tombe de la surface de chemise du premier rotor, sous la forme d'une cascade tombante, vers la surface de chemise du deuxième rotor,
- une première partie de la matière minérale fondue est façonnée en fibres au niveau du deuxième rotor et est évacuée du rotor par soufflage, et
- une deuxième partie de matière minérale fondue tombe du deuxième rotor sous la forme d'une cascade tombante,
**caractérisé en ce que**
- au moins 60% en poids de cette cascade tombante, qui tombe du deuxième rotor est conçue pour tomber vers la surface de chemise du premier rotor, vers une deuxième position en aval par rapport à ladite première position sur la surface de chemise,
- une partie de la matière minérale fondue est façonnée en fibres au niveau du premier rotor et est évacuée du rotor par soufflage, et **en ce que**
- le premier rotor de la paire de rotors supérieurs est équipé de moyens de soufflage pour évacuer par soufflage la matière minérale fondue façonnée en fibres de la surface de chemise du rotor.

2. Procédé selon la revendication 1, **caractérisé en ce que** le centre du jet de matière fondue est conçu pour frapper la surface de chemise du premier rotor à filer près du point le plus haut du rotor, de préférence dans un secteur de 0° à 30°, vu depuis le point le plus haut du rotor vers l'avant dans le sens de rotation du rotor, généralement dans un secteur de 0° à 15°.

3. Procédé selon la revendication 1, **caractérisé en ce que** le dispositif de soufflage de fibres est disposé sur la périphérie du premier rotor, sur une distance de 30% à 70%, de manière avantageuse sur 50% à 70% de sa périphérie.

4. Procédé selon la revendication 1, **caractérisé en ce que** le dispositif de soufflage au niveau du premier rotor de la paire de rotors supérieurs est axial dans un secteur de 10° à 50°, de manière avantageuse de 25° à 35° de la périphérie du premier rotor.

5. Procédé selon la revendication 1, **caractérisé en ce qu'**un liant est appliqué sur les fibres qui sont évacuées du premier rotor par soufflage.

6. Procédé selon la revendication 1, **caractérisé en ce qu'**une matière minérale fondue est en outre fournie sous la forme d'un deuxième jet de matière fondue
- vers une deuxième position sur la surface de chemise du premier rotor rotatif de la paire de rotors supérieurs, ou
- vers la surface de chemise du deuxième rotor rotatif de la paire de rotors supérieurs.

7. Procédé selon la revendication 6, **caractérisé en ce que** les matières fondues des premier et deuxième jets de matière fondue ont des compositions chimiques différentes et/ou des caractéristiques chimiques et/ou physiques différentes, telles la viscosité, la température et la tension superficielle.

8. Appareil à filer pour la fabrication de laine minérale, comprenant des rotors rotatifs pour le façonnage d'une matière minérale fondue en fibres, rotors parmi lesquels un premier et un deuxième rotors tournant l'un vers l'autre forment une paire de rotors supérieurs, et au moins un rotor, de préférence une paire de rotors, est disposé en dessous de la paire de rotors supérieurs, si bien que
- le premier rotor de la paire de rotors supérieurs présente une surface de chemise,
- vers laquelle une matière minérale fondue provenant d'un four de fusion ou analogue est conçue pour être fournie sous la forme d'un jet de matière fondue, et
- à partir de laquelle la matière minérale fondue tombe, sous la forme d'une cascade tombante, vers le deuxième rotor de la paire de rotors supérieurs,
- le deuxième rotor à filer de la paire de rotors supérieurs présente une surface de chemise,
- au niveau de laquelle une partie de la matière minérale fondue est façonnée en fibres, et
- à partir de laquelle une partie de la matière minérale fondue est évacuée sous la forme d'une cascade tombante,
et des moyens de soufflage pour évacuer par soufflage les fibres des surfaces de chemise,
**caractérisé en ce que**
- la distance minimale entre les surfaces de chemise des premier et deuxième rotors de la paire de rotors supérieurs mesure 5 à 15 mm, généralement 9 à 11 mm, et **en ce que**
- le premier rotor de la paire de rotors supérieurs est équipé de moyens de soufflage pour évacuer par soufflage la matière minérale fondue façonnée en fibres de la surface de chemise du rotor.

9. Appareil à filer selon la revendication 8, **caractérisé en ce que** le premier et le deuxième rotors de la paire de rotors supérieurs sont disposés l'un par rapport à l'autre de sorte que la majeure partie de la cascade tombante tombant de la surface de chemise du deuxième rotor frappe la surface de chemise du premier rotor.

10. Appareil à filer selon la revendication 8, **caractérisé en ce que** le point le plus haut du deuxième rotor se trouve à un niveau de ± 10°, de préférence de ± 5°, par rapport au niveau du point le plus haut du premier rotor.

11. Appareil à filer selon la revendication 8, **caractérisé en ce que** les points les plus hauts des premier et deuxième rotors se trouvent approximativement au même niveau.

12. Appareil à filer selon la revendication 8, **caractérisé en ce que** des moyens de soufflage sont disposés sur la périphérie du premier rotor, sur une distance de 30% à 70%, de préférence sur 50% à 70% de sa périphérie.

13. Appareil à filer selon la revendication 8, **caractérisé en ce que** des moyens de soufflage sont disposés sur la périphérie du premier rotor, sur une distance de 350 à 750 mm, de préférence sur 450 à 650 mm.

14. Appareil à filer selon la revendication 8, **caractérisé en ce que** le dispositif de soufflage des moyens de soufflage au niveau du premier rotor de la paire de rotors supérieurs est disposé axialement dans un secteur de 10° à 50°, de préférence de 25° à 35° de la périphérie du premier rotor.

15. Appareil à filer selon la revendication 8, **caractérisé en ce que** des moyens de soufflage sont disposés sur la périphérie des autres rotors sur une distance de 40% à 80% de chaque rotor respectif.

16. Appareil à filer selon la revendication 8, **caractérisé en ce que** la longueur totale des moyens de soufflage mesure 1 500 à 3 500 mm, de manière plus avantageuse 2 000 à 3 000 mm.

17. Appareil à filer selon la revendication 8, **caractérisé en ce que** le troisième rotor est disposé en dessous de la paire de rotors supérieurs de sorte que la matière minérale fondue tombant vers le bas par l'espace situé entre les rotors de la paire de rotors supérieurs frappe la surface de chemise du troisième rotor près du point le plus haut du troisième rotor, dans un secteur de 60°, de préférence de 25° à 40°, depuis le point le plus haut du rotor vers l'avant dans le sens de rotation du rotor.

18. Appareil à filer selon la revendication 8, **caractérisé en ce que** la vitesse de soufflage au niveau des rotors est de 80 à 330 m/s, de préférence de 100 à 250 m/s.

19. Appareil à filer selon la revendication 8, **caractérisé en ce que** la vitesse périphérique des rotors est inférieure à 330 m/s, de préférence de 30 à 250 m/s.

20. Appareil à filer selon la revendication 8, **caractérisé en ce que** les surfaces de chemise des premier et deuxième rotors sont rainurées.

21. Appareil à filer selon la revendication 8, **caractérisé en ce que** les surfaces de chemise des troisième et/ou quatrième rotors sont rainurées.

22. Appareil à filer selon la revendication 8, **caractérisé en ce que** l'appareil à filer a un profil ouvert.

23. Appareil à filer selon la revendication 8, **caractérisé en ce que** des moyens de commande pour diriger la matière minérale fondue vers une première position sur la surface de chemise du premier rotor sont disposés au-dessus de la paire de rotors supérieurs.

24. Appareil à filer selon la revendication 8, **caractérisé en ce que** l'appareil à filer comprend en outre
- des moyens pour diriger un deuxième jet de matière fondue
- vers une deuxième position sur la surface de chemise du premier rotor de la paire de rotors supérieurs, ou
- vers une position sur la surface de chemise du deuxième rotor de la paire de rotors supérieurs.
